# EUROPÄISCHE PATENTSCHRIFT

(11) **EP 0 393 331 B1**
(45) Veröffentlichungstag und Bekanntmachung des Hinweises auf die Patenterteilung: **10.02.1993**
(21) Anmeldenummer: 90103816.6
(22) Anmeldetag: 27.02.1990
(51) Int. Cl.: F16L 27/08, B23Q 11/10

(54) **Vorrichtung zur Zuführung eines Fluids zu einem rotierenden Maschinenteil**
Device for conveying a fluid to a rotating machine part
Dispositif pour amenée d'un fluide à une partie de machine rotative

(30) Priorität: 18.04.1989 DE 3912659
(43) Veröffentlichungstag der Anmeldung: 24.10.1990
(73) Patentinhaber: OTT-JAKOB GmbH & Co. Spanntechnik KG, 87663 Lengenwang (DE)
(72) Erfinder: Bauch, Karl, Dipl.-Ing., D-8960 Kempten (DE); Effenberger, Wolfgang, Dr.-Ing., D-8960 Kempten (DE)

(56) Entgegenhaltungen:
- EP-A- 0 250 703
- DE-A- 3 600 884
- DE-A- 3 810 060
- DE-C- 3 542 014

## Beschreibung

Die Erfindung betrifft eine Vorrichtung zur Zuführung eines Fluids zu einem rotierenden Maschinenteil, insbesondere einer Werkzeugmaschinenspindel, mit einem drehfest angeordneten Gehäuse, und einer darin drehbar gelagerten Hohlwelle, deren eines, inneres Ende über eine Gleitringdichtung mit einem Zuflußkanal im Gehäuse verbunden ist und deren anderes, äußeres Ende mit dem rotierenden Maschinenteil verbindbar ist.

Derartige Vorrichtungen zur Zuführung eines Fluids zu einem rotierenden Maschinenteil, auch "Drehdurchführungen" genannt, sind in den verschiedensten Ausführungen und für die verschiedensten Zwecke bekannt (vgl. Katalog 825D "DEUBLIN Rotating UNIONS" der Firma Deublin GmbH, D-6238 Hofheim-Wallau, Seiten 27 und 28). Derartige Vorrichtungen werden beispielsweise in Verbindung mit Werkzeugmaschinenspindeln verwendet, wobei das äußere Ende der Hohlwelle mit der Werkzeugmaschinenspindel bzw. einer zentral in dieser angeordneten Zugstange einer in die Werkzeugmaschinenspindel eingebauten Spanneinrichtung fest verbunden ist. In diesem Fall dient die Vorrichtung zur Zuführung eines Kühlschmiermittels zum Werkzeug. Solange während der Rotation der mit der Werkzeugmaschinenspindel bzw. der Spanneinrichtung verbundenen Hohlwelle die Zuführung des genannten Fluids erfolgt, treten an der Gleitringdichtung keine Probleme auf, da die Gleitringdichtung durch das Fluid geschmiert und die entstehende Reibungswärme abgeführt wird. Wenn jedoch eine Trockenbearbeitung des Werkstückes ohne Kühlschmiermittel erfolgen soll, dann sind hierfür die üblichen Drehdurchführungen nicht geeignet. Fehlt nämlich das Kühlschmiermittel an der Gleitringdichtung, dann wird, insbesondere bei höheren Spindeldrehzahlen,die Gleitringdichtung wegen fehlender Schmierung, insbesondere aber wegen fehlender Kühlung, rasch zerstört. Es sind deshalb spezielle Drehdurchführungen entwickelt worden, bei denen auch bei fehlender Hindurchleitung eines Fluids die Kühlung und Schmierung der Gleitringdichtung gewährleistet ist.

Bei einer bekannten Drehdurchführung für diesen Zweck (DE-C-35 42 014, Fig.1) kann bei Trockenbearbeitung (Trockenlauf), d.h. dann, wenn kein Fluid durch die Drehdurchführung hindurchgeleitet wird, ein Gleitring der Gleitringdichtung von dem anderen Gleitring abgehoben werden. Dies erfolgt bei der bekannten Drehdurchführung dadurch, daß der eine Gleitring an einem im Gehäuse axial verschiebbaren Hohlkolben angeordnet ist. Ruf den Hohlkolben wirkt eine Feder ein, die den Hohlkolben in Richtung von dem anderen Gleitring weg belastet. In dem Hohlkolben ist ferner ein entgegen der Strömungsrichtung des Fluids federbelastetes Sperrventil angeordnet. Durch den Druck des Fluids wird zunächst der Kolben bei geschlossenem Sperrventil entgegen der Kraft der Kolbenfeder verschoben und damit die Dichtflächen der beiden Gleitringe in Kontakt gebracht. Erst dann öffnet das Sperrventil und gibt den Durchfluß frei. Wenn jedoch bei Trockenlauf die Dichtflächen voneinander abgehoben sind, können Schmutzpartikel, die im Fluid, insbesondere im Kühlschmiermittel, welches im Kreislauf immer wieder verwendet wird, enthalten sind, zwischen die Dichtflächen gelangen. Bei Gleitringdichtungen weisen die Dichtflächen eine große Ebenheit auf und sind sehr hart. Gerät bei abgehobenen Gleitringen ein kleiner Fremdkörper zwischen die Dichtflächen und werden anschließend die Gleitringe wieder aneinandergedrückt, dann führt dieser Fremdkörper zu einer raschen Zerstörung der Gleitringdichtung. Auf diese Weise wird bei leicht verschmutztem Fluid die Lebensdauer der Gleitringe sehr verkürzt. Außerdem rotiert auch bei Trockenbearbeitung, bei welcher überhaupt kein Kühlschmiermittel durch die Drehdurchführung hindurchgeleitet werden muß, die Hohlwelle zusammen mit der Werkzeugmaschinenspindel. Dies führt, insbesondere bei hohen Spindeldrehzahlen, zu einem unnötigen Verschleiß der Kugellager, mit denen die Hohlwelle in dem Gehäuse gelagert ist. Außerdem können von der Drehdurchführung Lärm und Vibrationen ausgehen.

Bei einer anderen Art von Drehdurchführungen wird das Problem der Schmierung und Kühlung der Gleitringe während des Trockenlaufs dadurch beseitigt, daß den Gleitringen von außen her ein zusätzliches Kühl- und Schmiermittel zugeführt wird. Dies erfordert jedoch einen nicht unerheblichen konstruktiven Aufwand, denn das zusätzliche Kühl- und Schmiermittel muß dem Bereich der Gleitringe ständig zu- und abgeführt werden, damit die an den Gleitringen entstehende Reibungswärme kontinuierlich abgeführt wird. Bei Trockenbearbeitung tritt ein unnötiger Verschleiß der Kugellager und der Gleitringe sowie eine unnötige Verlustleistung ein. Außerdem sind auch die oben erwähnten Vibrationen und die Lärmbelästigung festzustellen.

Der Erfindung liegt daher die Aufgabe zugrunde, eine Vorrichtung zur Zuführung eines Fluids zu einem rotierenden Maschinenteil, insbesondere einer Werkzeugmaschinenspindel, der eingangs erwähnten Art zu schaffen, bei der bei fehlender Hindurchführung eines Fluids (Trockenlauf) die Gleitringe nicht voneinander abgehoben werden müssen und trotzdem ein Verschleiß desselben, ein Lagerverschleiß und Vibrationen vermieden werden, und die keine gesonderte Kühleinrichtung erfordert.

Dies wird gemäß einem ersten Lösungsvorschlag der Erfindung dadurch erreicht, daß im äußeren Ende der Hohlwelle ein zu dieser koaxiales und drehfest mit ihr verbundenes Kupplungsrohr axial verschiebbar angeordnet ist, daß das Kupplungsrohr als ein im äußeren Ende der Hohlwelle verschiebbarer Hohlkolben ausgebildet, beim Arbeiten mit Fluid unter dem Druck des Fluids entgegen der Kraft einer Rückstellfeder zum rotierenden Maschinenteil hin verschiebbar und unter Zwischenschaltung einer Dichtungsanordnung mit diesem kuppelbar ist.

Eine zweite Lösung der oben genannten Aufgabe besteht nach der Erfindung darin, daß am äußeren Ende der Hohlwelle ein zu dieser koaxiales, starr mit ihr verbundenes Kupplungsrohr vorgesehen ist, daß das Gehäuse gegenüber dem rotierenden Maschinenteil unter Wirkung eines Stellmotors axial verschiebbar ist und daß das Kupplungsrohr beim Arbeiten mit Fluid durch Axialverschiebung des Gehäuses zum rotierenden Maschinenteil hin unter Zwischenschaltung einer Dichtungsanordnung mit dem rotierenden Maschinenteil kuppelbar ist.

Die Erfindung geht also jeweils von dem Gedanken aus, bei Trockenlauf, d.h. wenn kein Fluid dem rotierenden Maschinenteil zugeführt werden soll, die gesamte Drehdurchführung von dem rotierenden Maschinenteil abzukuppeln. Bei dem ersten Lösungsvorschlag erfolgt das Abkuppeln dadurch, daß das im äußeren Ende der Hohlwelle teleskopisch verschiebbare Kupplungsrohr dann, wenn die Zufuhr des Fluids unterbrochen wird, durch die Kraft der Rückstellfeder vom rotierenden Maschinenteil weg verschoben wird. Das Ankuppeln erfolgt dadurch, daß das Kupplungsrohr unter dem Druck des Fluids entgegen der Kraft der Rückstellfeder zum rotierenden Maschinenteil hin verschoben wird. Bei dem zweiten Lösungsvorschlag erfolgt das An- und Abkuppeln durch axiale Verschiebung des gesamten, die Drehdurchführung enthaltenden Gehäuses mittels eines Stellmotors. In beiden Fällen wird dann, wenn kein Fluid dem rotierenden Maschinenteil zugeführt werden soll, die gesamte Drehdurchführung von dem rotierenden Maschinenteil abgekuppelt, was mehrere Vorteile hat. Während bei Trockenbearbeitung die Werkzeugmaschinenspindel rotiert, ruht die abgekuppelte Hohlwelle. Infolgedessen kann weder ein Verschleiß der Gleitringe noch ein Lagerverschleiß eintreten. Auch Vibrationen werden vermieden. Eine zusätzliche Kühleinrichtung für die Kühlung der Gleitringdichtungen kann entfallen. Ein Abheben der Gleitringe bei Trockenlauf ist ebenfalls nicht erforderlich und die hierdurch bedingten Nachteile werden auch vermieden. Insgesamt weist die Drehdurchführung eine hohe Lebensdauer auf, denn sie ist bei Trockenlauf völlig außer Funktion.

Es ist auch eine Vorrichtung zur Zuführung eines unter Druck stehenden Fluids zu einem rotierenden Maschinenteil bekannt (FR 1 505 040), bei welchem eine Hohlwelle in einem stationären Gehäuse drehbar und entgegen der Kraft einer Feder axial verschiebbar gelagert ist. Ein Teil der Hohlwelle ist als Kolben ausgebildet. Die Abdichtung zwischen dem rotierenden Kolben und dem stillstehenden Gehäuse erfolgt über zylindrische Dichtungsflächen zwischen dem Kolben und einer hierfür im Gehäuse vorgesehenen zylindrischen Bohrung. Das Spiel zwischen Kolben und der zylindrischen Bohrung soll möglichst klein sein, um eine Abdichtung zwischen beiden Teilen zu erzielen. Dies erfordert eine sehr hohe Herstellungsgenauigkeit. Die Dichtwirkung läßt bereits bei geringem Verschleiß erheblich nach, da die Kolbenflächen nicht federnd an die zylindrische Bohrung angedrückt werden. Wegen des zu erwartenden erheblichen Verschleißes ist diese Art der Abdichtung auch nur für geringe Drehzahlen verwendbar. Bei dieser bekannten Vorrichtung erfolgt die axiale Verschiebung der Hohlwelle dadurch, daß in dem Kolben eine Ventilanordnung mit einer gegenüber der Drehachse exzentrischen Durchflußbohrung vorgesehen ist. Die den Ventilsitz umgebende Fläche ist kegelförmig ausgebildet, so daß bei senkrecht verlaufender Drehachse eine Ventilkugel bei Stillstand der Hohlwelle jeweils zum niedrigsten Punkt der Kegelfläche rollt und die dort vorgesehene Durchflußbohrung verschließt. Wird ein Fluid unter Druck dem Kolben zugeführt, dann wird der Kolben und damit die gesamte Hohlwelle entgegen der Federkraft axial verschoben. Das äußere Ende der Hohlwelle wird durch diese Axialverschiebung mit einem rotierenden Maschinenteil gekuppelt. Hierdurch wird die Hohlwelle in Drehung versetzt und es wirken auf die exzentrisch wirkende Ventilkugel Zentrifugalkräfte, welche die Ventilkugel radial nach außen bewegen und vom Ventilsitz abheben. Hierdurch wird dann der Durchfluß geöffnet. Infolge der beschriebenen Ventilanordnung ist eine Hindurchleitung von Fluid nur bei Rotation möglich. Diese Druckschrift hat die vorliegende Erfindung nicht nahegelegt, denn wenn man die zylindrischen Dichtflächen durch eine Gleitringdichtung mit axialen Gleitflächen ersetzen würde, dann würden sich die axialen Gleitflächen bei axialer Verschiebung der Hohlwelle voneinander abheben und die gleichen Nachteile eintreten, die auch bei der Drehdurchführung nach der oben genannten DE 35 42 014 C1 vorhanden sind.

Bei einer anderen bekannten Drehdurchführung (GB 1 365 640) bildet das rotierende Maschinenteil eine Einheit mit der Hohlwelle. In der Hohlwelle ist ein Überleitungsrohr vorgesehen, welches durch eine Feder an den rotierenden Gleitring angedrückt wird und letzteren gegen den stationären Gleitring drückt. Hierdurch erfolgt eine axiale Anpressung der Gleitflächen. Das Überleitungsrohr wird ständig an den rotierenden Gleitring angedrückt und dient zum Hindurchleiten eines ersten Fluids, welches durch zentrale Bohrungen der beiden Gleitringe hindurchtritt. Parallel zu den zentralen Bohrungen weisen die Gleitringe mehrere, auf einem gemeinsamen Kreis angeordnete, Durchflußbohrungen auf, durch welche ein zweites Fluid hindurchfließen kann. Dieses zweite Fluid strömt dann weiter durch einen zwischen dem Überleitungsrohr und dem Inneren der Hohlwelle gebildeten Zwischenraum. Da das Überleitungsrohr sowohl zur Hindurchleitung eines Fluids als auch zur axialen Anpressung der Gleitringflächen dient, ist es durch die Druckfeder ständig an den stationären Gleitring angedrückt. Es kann von dem mit ihm rotierenden Körper und auch vom rotierenden Gleitring nicht abgekuppelt werden, es sei denn, durch Demontage der gesamten Drehdurchführung. Um unnötigen Verschleiß zu vermeiden, wird in dieser Druckschrift vorgeschlagen, die Anschlußstutzen, die zur Zuführung der Fluide in ein normalerweise stationäres Gehäuseteil dienen, von diesem stationären Gehäuseteil zu entfernen, so daß dann dieses stationäre Gehäuseteil mitrotieren kann. Das Entfernen der Anschlußstutzen ist jedoch eine zeitraubende und umständliche Angelegenheit und die Wiederanbringung der Anschlußstutzen erfordert ebenfalls einen größeren Zeitaufwand. Prinzipiell wird zwar das der vorliegenden Erfindung zugrundeliegende Problem mit dieser bekannten Drehdurchführung gelöst, jedoch auf andere und umständliche Weise. Da das Überleitungsrohr während des Betriebes der Drehdurchführung und auch beim Stillstand derselben axial nicht verschiebbar und auch nicht von irgendwelchen benachbarten Teilen abkuppelbar ist, konnte auch diese Druckschrift die vorliegende Erfindung mangels eines Vorbildes nicht nahelegen.

Vorteilhafte Ausgestaltungen der Erfindung sind in den Unteransprüchen 3 - 11 gekennzeichnet.

Die Erfindung wird in folgendem, anhand von mehreren in der Zeichnung dargestellten Ausführungsbeispielen näher erläutert.

Es zeigen:
Figur 1 ein erstes Ausführungsbeispiel im Axialschnitt,
Figur 2 einen Radialschnitt nach der Linie II-II der Figur 1,
Figur 3 einen Teilaxialschnitt eines zweiten Ausführungsbeispieles,
Figur 4 einen Axialschnitt eines dritten Ausführungsbeispieles.

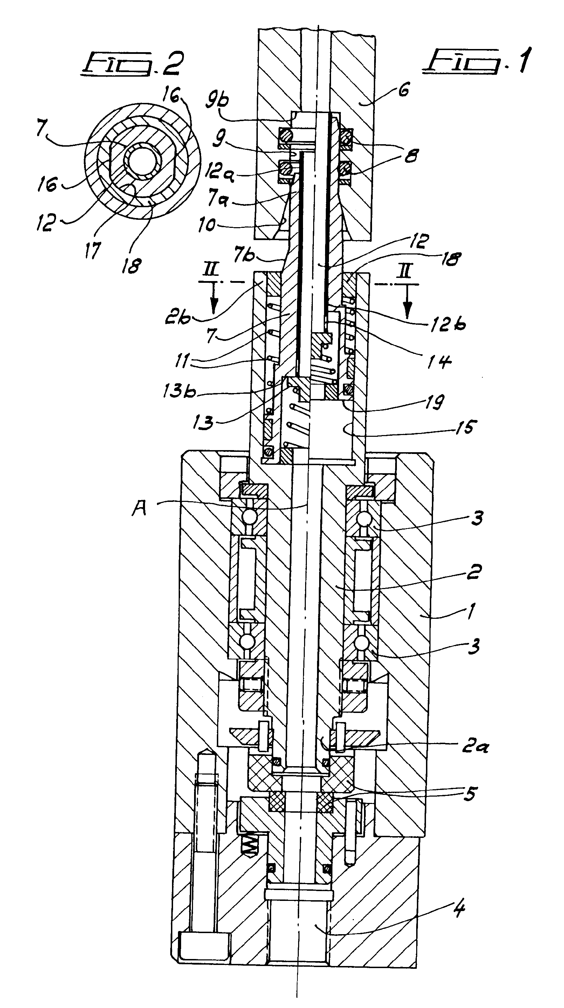

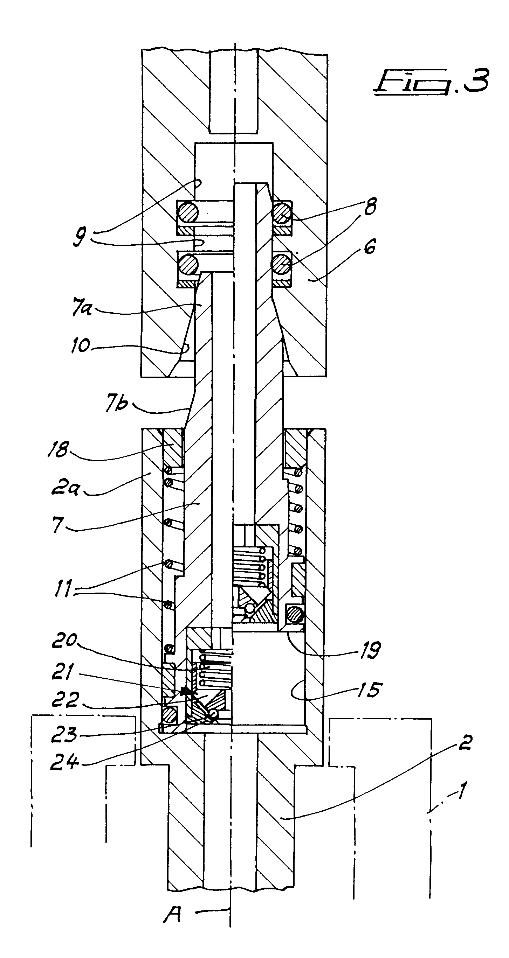

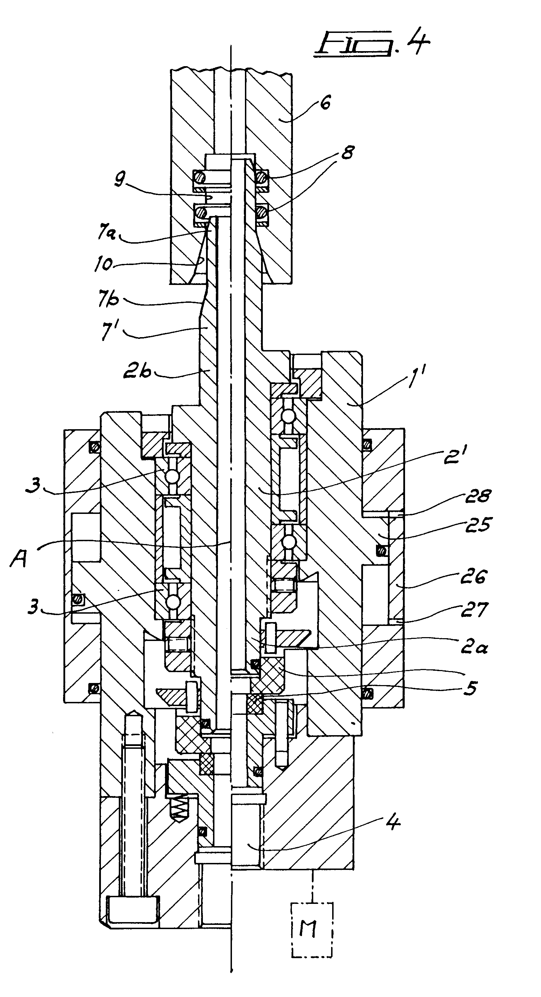

In der Zeichnung ist mit 1 ein drehfestes Gehäuse bezeichnet, welches bei diesem und dem in Figur 3 dargestellten Ausführungsbeispiel auch axial unverschiebbar ist. In dem Gehäuse 1 ist eine Hohlwelle 2 mittels der Kugellager 3 drehbar gelagert. Zwischen dem inneren Ende 2a der Hohlwelle und einem im Gehäuse 1 vorgesehenen Zuflußkanal 4 ist eine Gleitringdichtung 5 vorgesehen, die in bekannter Weise zwei Gleitringe aufweist. Das andere, äußere Ende 2a der Hohlwelle 2 ragt aus dem Gehäuse 1 heraus. Koaxial zur Drehachse A der Hohlwelle 2 ist ein rotierendes Maschinenteil 6 angeordnet, wobei es sich beispielsweise um die Zugstange einer in einer Werkzeugmaschinenspindel angeordneten Spanneinrichtung handeln kann.

Am äußeren Ende der Hohlwelle 2b ist ein Kupplungsrohr 7 vorgesehen, welches koaxial zur Achse A der Hohlwelle 2 angeordnet und gegenüber dem rotierenden Maschinenteil 6 axial verschiebbar ist. Das Kupplungsrohr 7 ist mit dem Maschinenteil 6 durch Axialverschiebung kuppelbar bzw. abkuppelbar, wobei zur Abdichtung des Kupplungsrohres 7 gegenüber dem Maschinenteil 6 eine Dichtungsanordnung 8 vorgesehen ist. In den Figuren 1, 3 und 4 ist rechts jeweils die gekuppelte Stellung und links die abgekuppelte Stellung dargestellt.

Das Kupplungsrohr 7 weist an seinem freien Ende einen in eine entsprechende Bohrung 9 des rotierenden Maschinenteiles 6 einschiebbaren Ansatz 7a auf. Dieser Ansatz 7a ist zweckmäßig zylindrisch ausgebildet. In der Bohrung 9 sind zwei den zylindrischen Ansatz in gekuppelter Stellung umschließende O-Ringdichtungen 8 vorgesehen.

An den Ansatz 7a schließt ein kegelstumpfförmiges Teil 7b an. In dem rotierenden Maschinenteil 6 ist eine entsprechende kegelstumpfförmige Fläche 10 vorgesehen, an die das kegelstumpfförmige Teil in gekuppelter Stellung anpreßbar ist. Durch diese Anpressung wird in gekuppelter Stellung von Maschinenteil 6 und Kupplungsrohr 7 eine Drehmomentsübertragung sichergestellt und damit ein Verschleiß der O-Ringe 8 vermieden.

Bei den in Figur 1, 2 und 3 dargestellten Ausführungsbeispielen ist das Kupplungsrohr 7 als Hohlkolben ausgebildet und unter dem Druck des Fluids entgegen der Kraft der Rückstellfeder 11 zum rotierenden Maschinenteil 6 hin verschiebbar. Bei dem in Figur 1 und 2 dargestellten Ausführungsbeispiel ist in dem Kupplungsrohr 7 ein Überströmrohr 12 axial verschiebbar, dessen äußeres Ende 12a aus dem Ansatz 7a des Kupplungsrohres 7 herausragt. Das andere, innere Ende 12b des Übertrömrohres 12 liegt an dem federbelasteten Ventilkörper 13 eines in Strömungsrichtung des Fluids schließenden Sperrventils an. Im Überströmrohr 12 sind ferner in der Nähe des inneren Endes 12b mehrere Überströmöffnungen 14 vorgesehen, die in entkuppelter Stellung von dem Kupplungsrohr 7 überdeckt sind. Das als Hohlkolben ausgebildete Kupplungsrohr 7 ist ferner in einem Zylinder 15 am äußeren Ende 2b der Hohlwelle 2 axial verschiebbar, jedoch drehfest mit der Hohlwelle verbunden. Zu diesem Zweck weist das Kupplungsrohr 7 in seinem mittleren Teil zwei Abflachungen 16 auf und ist in einer entsprechenden Durchbrechung 17 eines in das äußere Ende 2b eingepreßten Ringes 18 unverdrehbar geführt.

Figur 1 zeigt in der linken Hälfte die abgekuppelte Stellung, wenn das Fluid, beispielsweise Kühlschmiermittel, in dem Zuflußkanal 4 drucklos ist. Unter Wirkung der Rückstellfeder 11 ist der Ansatz 7a teilweise aus der Bohrung 9 so weit herausgezogen, daß er die O-Ringe 8 nicht mehr berührt. Es besteht keine Verbindung zwischen dem rotierenden Maschinenteil 6 und dem Kupplungsrohr 7, so daß das Kupplungsrohr 7 und alle Teile der Drehdurchführung ruhen.

Soll nun dem rotierenden Maschinenteil 6 ein Kühlschmiermittel zugeführt werden, dann wird dieses unter Druck in den Zuflußkanal 4 eingeleitet. Da der Ventilköper 13 am Ventilsitz 13b aufsitzt, ist der Durchfluß im Kupplungsrohr 7 blockiert. Infolgedessen wird durch den Druck des Fluids das als Kolben ausgebildete Kupplungsrohr 7 mit seinem Ansatz 7a in die Bohrung 9 entgegen der Kraft der Rückstellfeder 11 eingeschoben. Kurz nachdem der Ansatz 7a in den unteren O-Ring 8 eingeschoben wurde, kommt das äußere Ende 12a des Überströmrohres 12 an dem Absatz 9b der Bohrung 9 zur Anlage. Wird das Kupplungsrohr 7 unter dem Druck des Fluids weiter in Richtung zum rotierenden Maschinenteil 6 hin verschoben, dann hebt das innere Ende 12b des Überströmrohres 12 den Ventilkörper 13 vom Ventilsitz 13b ab. Aufgrund der größeren Ringfläche des Kolbens 19 wird jedoch das Kupplungsrohr 7 weiter in Richtung zum rotierenden Maschinenteil 6 verschoben, bis das kegelstumpfförmige Teil 7b an der kegelstumpfförmigen Fläche 10 anliegt. Hierdurch erfolgt eine Drehmomentsübertragung von dem rotierenden Maschinenteil 6 auf das Kupplungsrohr 7 und von diesem über den Ring 18 auf die Hohlwelle 2. In angekuppeltem Zustand ist der Ventilkörper 13 vom Ventilsitz 13b abgehoben und das Fluid kann ungehindert durch die Überströmöffnungen 14 in das Überströmrohr 12 und von diesem in das rotierende Maschinenteil 6 strömen. Wird der Druck auf das Fluid aufgehoben, dann bewegt die Rückstellfeder 11 das Kupplungsrohr 7 wieder in seine entkuppelte Stellung.

Das in Figur 3 dargestellte Ausführungsbeispiel unterscheidet sich von dem in Figur 1 und 2 dargestellten Ausführungsbeispiel nur in der Ausgestaltung des Sperrventils. Teile gleicher Funktion sind mit den gleichen Bezugszeichen bezeichnet und obige Beschreibung trifft für das in Figur 3 dargestellte Ausführungsbeispiel sinngemäß zu. Bei dem in Figur 3 dargestellten Ausführungsbeispiel fehlt das Überströmrohr 12. Bei diesem Ausführungsbeispiel ist in dem Kupplungsrohr 7 ein in Strömungsrichtung des Fluids entgegen der Kraft einer Vorspannfeder 20 öffnendes Sperrventil 21 angeordnet. Der Ventilkörper 22 ist mit einem Dichtungsring 23 versehen, der in geschlossener Stellung des Ventils an dem Ventilsitz 24 anliegt. Die Vorspannkraft der Vorspannfeder ist so gewählt, daß der Ventilkörper 22 erst dann vom Ventilsitz 24 abgehoben wird, wenn das kegelstumpfförmige Teil 7b an der kegelstumpfförmigen Fläche 10 anliegt. Bei diesem Ausführungsbeispiel öffnet das Sperrventil 21 druckabhängig und nicht wie bei dem vorhergehenden Ausführungsbeispiel, positionsgebunden.

Sperrventile im Fluidstrom können zu Problemen führen. Aus diesem Grund ist in Figur 4 ein Ausführungsbeispiel gezeigt, welches ohne derartige Sperrventile betrieben werden kann. Bei diesem Ausführungsbeispiel ist das Kupplungsrohr 7′ starr mit dem äußeren Ende 2b der Hohlwelle 2′ verbunden. Kupplungsrohr 7′ und Hohlwelle 2′ können auch, wie es in der Zeichnung dargestellt ist, aus einem Teil bestehen. Das Gehäuse 1′ ist gegenüber dem rotierenden Maschinenteil 6 unter Wirkung eines Stellmotors M axial verschiebbar. Bei dem gezeigten Ausführungsbeispiel ist das Gehäuse 1′ mit einem Ringkolben 25 versehen und in einem, das Gehäuse konzentrisch umgebenden, Zylinder 26 verschiebbar. Der Ringkolben 25 kann bei diesem Ausführungsbeispiel doppelseitig mit einem zusätzlichen Druckmedium hydraulisch oder pneumatisch beaufschlagt werden. Indem das Druckmedium in die untere Zuführbohrung 27 eingeleitet wird, wird das Gehäuse 1′ in axialer Richtung zu dem rotierenden Maschinenteil 6 hin verschoben. Hierdurch gelangt das Kupplungsrohr 7′ aus seiner in Figur 4, links, dargestellten entkuppelten Stellung in seine in Figur 4, rechts, dargestellte gekuppelte Stellung. Durch Einleiten von Druckmedium in die zweite Zuführbohrung 28 kann das Gehäuse 1′ in entgegengesetzter Richtung von dem rotierenden Maschinenteil 6 wegbewegt und damit das Kupplungsrohr 7′ vom Maschinenteil 6 abgekuppelt werden. Alle übrigen Teile, die in ihrer Funktion dem eingangs erwähnten Ausführungsbeispiel entsprechen, wurden mit den gleichen Bezugszeichen versehen, so daß die Beschreibung des in Figur 1 und 2 dargestellten Ausführungsbeispieles auch für das in Figur 4 dargestellte Ausführungsbeispiel sinngemäß zutrifft.

Gegebenenfalls ist es auch denkbar, den Ringkolben 25 nur einseitig zu beaufschlagen und seine Rückstellung durch eine Feder zu bewirken. Außerdem ist es auch möglich, anstelle des Ringkolbens 25 einen völlig gesonderten Stellmotor M auf das Gehäuse 1′ einwirken zu lassen, wobei es sich um eine separate Kolben-Zylinder-Einheit oder auch einen Elektromagneten handeln kann. Schließlich kann das Kupplungsrohr anstelle eines Ansatzes auch eine Büchse aufweisen, die auf einem entsprechenden Ansatz am rotierenden Maschinenteil aufschiebbar ist.

## Patentansprüche

1. Vorrichtung zur Zuführung eines Fluids zu einem rotierenden Maschinenteil (6), insbesondere einer Werkzeugmaschinenspindel, mit einem drehfest angeordneten Gehäuse (1), und einer darin drehbar gelagerten Hohlwelle (2), deren eines, inneres Ende (2a) über eine Gleitringdichtung (5) mit einem Zuflußkanal im Gehäuse (1) verbunden ist und deren anderes, äußeres Ende (2b) mit dem rotierenden Maschinenteil (6) verbindbar ist, **dadurch gekennzeichnet,** daß im äußeren Ende (2b) der Hohlwelle (2) ein zu dieser koaxiales und drehfest mit ihr verbundenes Kupplungsrohr (7) axial verschiebbar angeordnet ist, daß das Kupplungsrohr (7) als ein im äußeren Ende (2b) der Hohlwelle (2) verschiebbarer Hohlkolben ausgebildet, beim Arbeiten mit Fluid unter dem Druck des Fluids entgegen der Kraft einer Rückstellfeder (11) zum rotierenden Maschinenteil hin verschiebbar unter Zwischenschaltung einer Dichtungsanordnung (8) mit diesem kuppelbar ist.

2. Vorrichtung zur Zuführung eines Fluids zu einem rotierenden Maschinenteil (6), insbesondere einer Werkzeugmaschinenspindel, mit einem drehfest angeordneten Gehäuse (1), und einer darin drehbar gelagerten Hohlwelle (2′) deren eines, inneres Ende (2a) über eine Gleitringdichtung (5) mit einem Zuflußkanal (4) im Gehäuse (1) verbunden ist und deren anderes, äußeres Ende (2b) mit dem rotierenden Maschinenteil (6) verbindbar ist, **dadurch gekennzeichnet,** daß am äußeren Ende (2b) der Hohlwelle (2′) ein zu dieser koaxiales, starr mit ihr verbundenes Kupplungsrohr (7′) vorgesehen ist, daß das Gehäuse (1′) gegenüber dem rotierenden Maschinenteil (6) unter Wirkung eines Stellmotors (25, 26; M) axial verschiebbar ist und daß das Kupplungsrohr (7′) beim Arbeiten mit Fluid durch Axialverschiebung des Gehäuses (1′) zum rotierenden Maschinenteil (6) hin unter Zwischenschaltung einer Dichtungsanordnung (8) mit dem rotierenden Maschinenteil (6) kuppelbar ist.

3. Vorrichtung nach Anspruch 1 oder 2, **dadurch gekennzeichnet**, daß das Kupplungsrohr (7, 7′) an seinem freien Ende einen in eine entsprechende Bahrung (9) des rotierenden Maschinenteils (6) einschiebbaren Ansatz (7a) aufweist.

4. Vorrichtung nach Anspruch 3, **dadurch gekennzeichnet,** daß der Ansatz (7a) zylindrisch ist.

5. Vorrichtung nach Anspruch 3 oder 4, **dadurch gekennzeichnet**, daß in der Bohrung (9) mindestens eine den Ansatz (7a) in gekuppelter Stellung umschließenden O-Ringdichtung (8) vorgesehen ist.

6. Vorrichtung nach Anspruch 4 und 5, **dadurch gekennzeichnet**, daß sich an den Ansatz (7a) ein kegelstumpfförmiges Teil (7b) anschließt, welches in gekuppelter Stellung an eine entsprechende kegelstumpfförmige Fläche (10) im rotierenden Maschinenteil (6) anpreßbar ist.

7. Vorrichtung nach Anspruch 1, **dadurch gekennzeichnet,** daß in dem Kupplungsrohr (7) ein Überströmrohr (12) axial verschiebbar ist, dessen eines, äußeres Ende (12a) aus dem Ansatz (7b) des Kupplungsrohres (7) herausragt und dessen anderes, inneres Ende (12b) einen an einem federbelasteten Ventilkörper (13) eines in Strömungsrichtung schließenden Sperrventil anliegt, daß im Überströmrohr (12) in der Nähe des inneren Endes (12b) mindestens eine Überströmöffnung (14) vorgesehen ist, derart, daß während eines größeren Teils der Vorwärtsbewegung des Kupplungsrohres (7) zum rotierenden Maschinenteil (6) hin der Ventilkörper (13) an seinem Ventilsitz (13b) anliegt und vom inneren Ende (12b) des Überströmrohres (12) erst vom Ventilsitz (13b) abgehoben wird, wenn das äußere Ende (12a) des Überströmrohres (12) an einem Absatz (9b) des rotierenden Maschinenteils (6) anstößt.

8. Vorrichtung nach Anspruch 1, **dadurch gekennzeichnet,** daß in dem Kupplungsrohr (7) ein in Strömungsrichtung des Fluids entgegen der Kraft einer Vorspannfeder (20) öffnendes Sperrventil (21) angeordnet ist.

9. Vorrichtung nach Anspruch 2, **dadurch gekennzeichnet,** daß der Stellmotor eine Kolben-Zylinder-Einheit (25, 26; M) ist.

10. Vorrichtung nach Anspruch 9, **dadurch gekennzeichnet,** daß das Gehäuse (1′) mit einem Ringkolben (25) versehen ist und in einem das Gehäuse konzentrisch umgebenden Zylinder (26) verschiebbar ist.

11. Vorrichtung nach Anspruch 1 oder 2, **dadurch gekennzeichnet,** daß das Kupplungsrohr an seinem freien Ende eine auf einen entsprechenden Ansatz des rotierenden Maschinenteils aufschiebbare Büchse aufweist.

## Claims

1. Device for feeding a fluid to a rotating machine part (6), in particular a machine tool spindle, having a housing (1) arranged to be fixed against rotation and a hollow shaft (2) mounted rotatably therein, one end of which, the inner end (2a), is connected by way of a sliding ring seal (5) to an inlet duct in the housing (1) and the other end of which, the outer end (2b), can be connected to the rotating machine part (6), characterised in that a coupling tube (7) coaxial with the hollow shaft (2) and connected to it to be fixed against rotation is arranged to be axially slidable in the outer end (2b) thereof and the coupling tube (7) is designed as a hollow plunger slidable in the outer end (2b) of the hollow shaft (2), is in operation with fluid movable under the pressure of the fluid towards the rotating machine part in opposition to the force of a return spring (11) and can be engaged with this machine part with a sealing arrangement (8) interposed.

2. Device for feeding a fluid to a rotating machine part (6), in particular a machine tool spindle, having a housing (1) arranged to be fixed against rotation and a hollow shaft (2′) mounted rotatably therein, one end of which, the inner end (2a), is connected by way of a sliding ring seal (5) to an inlet duct (4) in the housing (1) and the other end of which, the outer end (2b) can be connected to the rotating machine part (6), characterised in that a coupling tube (7′) coaxial with the hollow shaft (2′) and connected fixedly to it is provided at the outer end (2b) thereof, the housing (1′) is movable axially with respect to the rotating machine part (6) under the action of a servo-motor (25, 26; M) and in that in operation with fluid, the coupling tube (7′) can be engaged with the rotating machine part (6) by axial movement of the housing (1′) towards the rotating machine part (6) with a sealing arrangement (8) interposed.

3. Device according to claim 1 or 2, characterised in that at its free end the coupling tube (7,7′) has an extension (7a) which can be pushed into a corresponding bore (9) in the rotating machine part (6).

4. Device according to claim 3, characterised in that the extension (7a) is cylindrical.

5. Device according to claim 3 or 4, characterised in that at least one O-ring seal (8) surrounding the extension (7a) in the engaged position is provided in the bore (9).

6. Device according to claims 4 and 5, characterised in that the extension (7a) is adjoined by a frustoconical portion (7b) which can be pressed against a corresponding frustoconical surface (10) in the rotating machine part (6) in the engaged position.

7. Device according to claim 1, characterised in that an overflow tube (12) is axially slidable in the coupling tube (7), one end, the outer end (12a), of the overflow tube projecting from the extension (7a) of the coupling tube (7) and the other, inner, end (12b) bearing against a spring-loaded valve body (13) of a stop valve closing in the direction of flow, and at least one overflow opening (14) is provided in the overflow tube (12) in the vicinity of the inner end (12b), in such manner that during a major part of the forward movement of the coupling tube (7) toward the rotating machine part (6) the valve body (13) bears against ist valve seat (13b) and is moved away from the valve seat (13b) by the inner end (12b) of the overflow tube (12) only when the outer end (12a) of the overflow tube (12) abuts against a shoulder (9b) of the rotating machine part (6).

8. Device according to claim 1, characterised in that a stop valve (21) opening in the direction of flow of the fluid in opposition to the force of a biasing spring (20) is arranged in the coupling tube (7).

9. Device according to claim 2, characterised in that the servomotor is a piston and cylinder unit (25, 26; M).

10. Device according to claim 9, characterised in that the housing (1′) is provided with an annular piston (25) and is slidable in a cylinder (26) surrounding the housing concentrically.

11. Device according to claim 1 or 2, characterised in that the coupling tube has at its free end a sleeve which can be pushed over a corresponding extension of the rotating machine part.

## Revendications

1. Dispositif pour amener un fluide à un organe de machine tournant (6), et en particulier à une broche de machine-outil, comprenant un carter (1) monté fixe en rotation et un arbre creux (2) qui est monté tournant dans ce dernier, dont une extrémité intérieure (2a) est reliée par l'intermédiaire d'une garniture étanche à bagues de glissement (5) à un canal d'amenée ménagé dans le carter (1) et dont l'autre extrémité extérieure (2b) peut être reliée à l'organe de machine tournant (6), caractérisé par le fait qu'un tube d'accouplement (7) est disposé de manière à pouvoir coulisser axialement dans l'extrémité extérieure (2b) de l'arbre creux (2) en étant coaxial avec ce dernier et en lui étant relié d'une manière fixe en rotation, et par le fait que le tube d'accouplement (7) est réalisé sous la forme d'un piston creux qui peut coulisser dans l'extrémité extérieure (2b) de l'arbre creux (2), et que, lorsque l'on travaille avec un fluide, il peut être déplacé vers l'organe de machine tournant sous la pression du fluide et à l'encontre de la force d'un ressort de rappel (11), et il peut être accouplé à cet organe avec interposition d'un dispositif d'étanchéité (8).

2. Dispositif pour amener un fluide à un organe de machine tournant (6), et en particulier à une broche de machine-outil, comprenant un carter (1) monté fixe en rotation et un arbre creux (2′) qui est monté tournant dans ce dernier, dont une extrémité intérieure (2a) est reliée par l'intermédiaire d'une garniture étanche à bagues de glissement (5) à un canal d'amenée (4) ménagé dans le carter (1) et dont l'autre extrémité extérieure (2b) peut être reliée à l'organe de machine tournant (6), caractérisé par le fait qu'il est prévu sur l'extrémité extérieure (2b) de l'arbre creux (2′) un tube d'accouplement (7′) qui est coaxial avec ce dernier et qui lui est relié d'une manière rigide, que le carter (1′) peut être déplacé axialement par rapport à l'organe de machine tournant (6) sous l'effet d'un servomoteur (25, 26 ; M), et par le fait que, lorsque l'on travaille avec un fluide, et grâce à un déplacement axial du carter (1′) vers l'organe de machine tournant (6), le tube d'accouplement (7′) peut être accouplé à l'organe de machine tournant (6) avec interposition d'un dispositif d'étanchéité (8).

3. Dispositif selon la revendication 1 ou 2, caractérisé par le fait que le tube d'accouplement (7, 7′) présente à son extrémité libre un prolongement (7a) qui peut être enfoncé dans un perçage correspondant (9) de l'organe de machine tournant (6).

4. Dispositif selon la revendication 3, caractérisé par le fait que le prolongement (7a) est cylindrique.

5. Dispositif selon la revendication 3 ou 4, caractérisé par le fait qu'il est prévu dans le perçage (9) au moins un joint torique d'étanchéité (8) qui entoure le prolongement (7a) dans la position accouplée.

6. Dispositif selon la revendication 4 et 5, caractérisé par le fait que se raccorde au prolongement (7a) une partie en forme de tronc de cône (7b) qui, dans la position accouplée, peut être serrée contre une surface correspondante en forme de tronc de cône (10) ménagée dans l'organe de machine tournant (6).

7. Dispositif selon la revendication 1, caractérisé par le fait que l'on peut faire coulisser axialement dans le tube d'accouplement (7) un tube de trop-plein (12) dont une extrémité (12a) qui est son extrémité extérieure fait saillie hors du prolongement (7a) du tube d'accouplement (7) et dont l'autre extrémité (12b) qui est son extrémité intérieure porte sur un corps de soupape (13) chargé par un ressort d'une soupape d'arrêt qui ferme dans la direction de l'écoulement, et par le fait qu'il est prévu dans le tube de trop-plein (12), au voisinage de l'extrémité intérieure (12b), au moins un orifice de trop-plein (14), et ce, d'une manière telle que, pendant une très grande partie du déplacement vers l'avant du tube d'accouplement (7) vers l'organe de machine tournant (6), le corps de soupape (13) repose sur son siège de soupape (13b), et qu'il n'est soulevé du siège de soupape (13b) par l'extrémité intérieure (12b) du tube de trop-plein (12) que lorsque l'extrémité extérieure (12a) du tube de trop-plein (12) heurte un épaulement (9b) de l'organe de machine tournant (6).

8. Dispositif selon la revendication 1, caractérisé par le fait qu'une soupape d'arrêt (21) qui s'ouvre dans la direction de l'écoulement du fluide à l'encontre de la force d'un ressort à compression initiale (20) est disposée dans le tube d'accouplement (7).

9. Dispositif selon la revendication 2, caractérisé par le fait que le servomoteur est un ensemble piston-cylindre (25, 26 ; M).

10. Dispositif selon la revendication 9, caractérisé par le fait que le carter (1′) est muni d'un piston annulaire (25), et qu'il peut coulisser dans un cylindre (26) qui entoure le carter d'une manière concentrique.

11. Dispositif selon la revendication 1 ou 2, caractérisé par le fait que le tube d'accouplement comporte à son extrémité libre une douille qui peut être passée sur un prolongement correspondant de l'organe de machine tournant.
